# EUROPEAN PATENT APPLICATION

(11) **EP 4 696 440 A1**
(43) Date of publication of application: **18.02.2026**
(21) Application number: 24830511.2
(22) Date of filing: 13.06.2024
(51) Int. Cl.: B23D 57/02

(54) **CHAIN SAW AND ELECTRIC TOOL**

(30) Priority: 30.06.2023 CN 202321716369 U; 30.06.2023 CN 202310803482; 30.06.2023 CN 202310805399; 28.09.2023 CN 202311277454; 18.10.2023 CN 202322807316 U; 01.03.2024 CN 202410239718
(71) Applicant: Nanjing Chervon Industry Co., Ltd., Nanjing, Jiangsu 211106 (CN)
(72) Inventor: XU, Bowei, Nanjing, Jiangsu 211106 (CN); PAN, Li, Nanjing, Jiangsu 211106 (CN); OU, Zhaodi, Nanjing, Jiangsu 211106 (CN); LI, Yang, Nanjing, Jiangsu 211106 (CN); SHU, Yiping, Nanjing, Jiangsu 211106 (CN)
(74) Representative: Sun, Yiming
(86) International application number: PCT/CN2024/099008
(87) International publication number: WO 2025/001865

(57) **Abstract**

Provided are a chainsaw and a power tool. The chainsaw includes a working component including a guide plate and a chain; a body portion including a housing, where a front end of the body portion is configured for mounting the working component; an electric motor accommodated in the housing and configured to output power to drive the working component to work; a power supply device detachably connected to the housing to provide electrical energy for the chainsaw; a display device mounted to the housing, where the display device has a display interface for displaying an operating state of the chainsaw; and a control device electrically connected to at least the display device; where the control device is configured to respond to any one of multiple preset instructions to light up the display interface. According to the above technical solutions, the chainsaw capable of automatically activating the brightness of the display interface of the display device can be provided.

## Description

This application claims priority to Chinese Patent Application No. 202321716369.3 filed with the China National Intellectual Property Administration (CNIPA) on Jun. 30, 2023, Chinese Patent Application No. 202310803482.3 filed with the CNIPA on Jun. 30, 2023, Chinese Patent Application No. 202310805399.X filed with the CNIPA on Jun. 30, 2023, Chinese Patent Application No. 202311277454.9 filed with the CNIPA on Sep. 28, 2023, Chinese Patent Application No. 202322807316.9 filed with the CNIPA on Oct. 18, 2023, and Chinese Patent Application No. 202410239718.X filed with the CNIPA on Mar. 1, 2024, the disclosures of which are incorporated herein by reference in their entireties.

### TECHNICAL FIELD

The present application relates to a chainsaw and a power tool.

### BACKGROUND

In the related art, a chainsaw is provided with a display device. However, for the existing chainsaw provided with the display device, when a user needs to check operating state information of the chainsaw, the user is often required to press a display button to activate a display interface of the display device. Such a method easily diverts the user's attention, preventing the user from focusing on the current operation and easily causing safety accidents. Additionally, to avoid the above problem, some chainsaws configure the display interface of the display device to be always on, improving the safety of the chainsaw. However, such a configuration wastes a large amount of electrical energy and is unfavorable to energy conservation and environmental protection since the display interface remains in a display state even when the user has no need to check the operating state of the chainsaw.

This part provides background information related to the present application, and the background information is not necessarily the existing art.

### SUMMARY

An object of the present application is to solve or at least alleviate part or all of the preceding problems. Therefore, an object of the present application is to provide a chainsaw capable of automatically activating the brightness of a display interface of a display device. The chainsaw can automatically activate the brightness of the display interface of the display device according to usage requirements of a user, thereby improving the safety of the chainsaw and contributing to energy conservation and environmental protection.

To achieve the preceding object, the present application adopts the technical solutions below. A chainsaw includes a working component including a guide plate and a chain; a body portion including a housing, where the front end of the body portion is configured for mounting the working component; an electric motor accommodated in the housing and configured to output power to drive the working component to work; a power supply device detachably connected to the housing to provide electrical energy for the chainsaw; a display device mounted to the housing, where the display device has a display interface for displaying an operating state of the chainsaw; and a control device electrically connected to at least the display device. The control device is configured to respond to any one of multiple preset instructions to light up the display interface.

The multiple preset instructions include at least two of a button trigger instruction, a toggle trigger instruction, a hardware insertion/removal trigger instruction, a touch input instruction, or a remote trigger instruction.

The display device is provided with a touch region configured to receive the touch input instruction.

An operating member is further included, and the control device is configured to light up the display interface in response to an instruction output from the operating member.

The operating member includes at least one of a button, a toggle, or a switch.

The display device is configured to be communicatively connected to an external device, and the external device is at least configured to allow a user to light up or turn off the display interface and generate the remote trigger instruction based on an operation of the user.

The control device is further configured to detect an insertion/removal connection state of the power supply device and generate the hardware insertion/removal trigger instruction based on the insertion/removal connection state.

A photosensitive module is further included, where the photosensitive module is integrated with the display device or the housing, and the control device is configured to acquire light detection information from the photosensitive module and convert the light detection information into a first brightness adjustment instruction.

The display device is configured to be communicatively connected to an external device, and the external device is at least configured to allow a user to set display brightness of the display interface.

The control device is configured to turn off the display interface when a duration for which no operation is performed on the chainsaw reaches a preset time.

The display device is configured to set the preset time in a stepless adjustment manner.

An Internet of things (IoT) module is further included, where the loT module is configured to be communicatively connected to at least an external device to receive or send information related to the chainsaw, a projection of a display plane on a first plane at least partially overlaps a projection of the loT module on the first plane, and the first plane is substantially parallel to the display plane.

The loT module is at least partially located within a preset spherical region with the center being a display center of the display interface and the radius being greater than or equal to 0 mm and less than or equal to 50 mm.

The loT module is provided with a universal asynchronous receiver-transmitter (UART) interface, and the loT module establishes a bidirectional communication connection with the control device through the UART interface.

A power tool includes a cutting portion; a body portion including a housing, where the front end of the body portion is configured for mounting the cutting portion; an electric motor accommodated in the housing and configured to output power to drive the cutting portion to work; a power supply device detachably connected to the housing to provide electrical energy for the cutting tool; a display device mounted to the housing, where the display device has a display interface for displaying an operating state of the chainsaw; and a control device electrically connected to at least the display device. The control device is configured to respond to any one of multiple preset instructions to light up the display interface.

A chainsaw includes a working component including a guide plate and a chain; a body portion including a housing, where the front end of the body portion is configured for mounting the working component; an electric motor accommodated in the housing and configured to output power to drive the working component to work; a power supply device detachably connected to the housing to provide electrical energy for the chainsaw; a display device mounted to the housing, where the display device has a display interface for displaying an operating state of the chainsaw; and a control device electrically connected to at least the display device. The display interface has at least first display brightness and second display brightness; and the control device is configured to respond to any one of at least two preset instructions to control the display interface to switch from the first display brightness to the second display brightness.

The at least two preset instructions include at least one of a button trigger instruction, an adaptive photosensitive trigger instruction, or a remote trigger instruction.

A photosensitive module is further included, where the photosensitive module is integrated with the display device or the housing, and the control device is configured to acquire light detection information from the photosensitive module and convert the light detection information into a first brightness adjustment instruction.

An operating member is further included, where the operating member includes at least one of a button, a toggle, or a switch, and the control device is configured to acquire position detection information of the operating member and convert the position detection information into a second brightness adjustment instruction.

The display device is configured to be communicatively connected to an external device, and the external device is at least configured to allow a user to set display brightness of the display interface.

The present application has the following benefits: the display device of the chainsaw has the display interface for displaying the operating state of the chainsaw, and the control device is electrically connected to at least the display device and configured to respond to any one of multiple instructions to light up the display interface so that the user does not need to manually light up the display interface of the display device, thereby preventing the user from manually lighting up the display interface and the resulting distraction and improving the safety of the chainsaw.

### BRIEF DESCRIPTION OF DRAWINGS

FIG. 1 is a side view of a chainsaw according to an example of the present application.
FIG. 2 is a top view of a chainsaw according to an example of the present application.
FIG. 3 is a schematic view of a display interface of a display device according to an example of the present application.
FIG. 4 is an electrical control schematic according to an example of the present application.
FIG. 5 is a structural view of a guide plate pressing cover plate according to an example of the present application from one angle.
FIG. 6 is a structural view of a guide plate pressing cover plate according to an example of the present application from another angle.
FIG. 7 is a structural view of a nut anti-loss structure according to an example of the present application from one angle.
FIG. 8 is a structural view of a nut anti-loss structure according to an example of the present application from another angle.
FIG. 9 is a plan view of a power tool as an example of the present application.
FIG. 10 is an electrical control schematic of the power tool shown in FIG. 9.
FIG. 11 is another electrical control schematic of the power tool shown in FIG. 9.
FIG. 12 is a control flowchart of a controller starting an electric motor in the power tool shown in FIG. 9.
FIG. 13 is another control flowchart of a controller starting an electric motor in the power tool shown in FIG. 9.
FIG. 14 is another control flowchart of a controller starting an electric motor in the power tool shown in FIG. 9.
FIG. 15 is a perspective view of a chainsaw as an example of the present application.
FIG. 16 is an exploded view of some structures of the chainsaw shown in FIG. 15.
FIG. 17 is a plan view of a braking mechanism of the chainsaw shown in FIG. 15.
FIG. 18 is a plan view showing a brake operating member, a stop, and a target member in an electronic brake at different positions in the braking mechanism shown in FIG. 17.
FIG. 19 is a plan view showing that the brake operating member triggers the electronic brake, as shown in FIG. 18.
FIG. 20 is a plan view showing that the brake operating member triggers a mechanical brake, as shown in FIG. 18.
FIG. 21 is a perspective view of a housing and a brake operating member and a stop of a braking mechanism of the chainsaw shown in FIG. 15.
FIG. 22 is a perspective view of a brake operating member, a stop, and a target member in an electronic brake in the braking mechanism shown in FIG. 17.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

A power tool may be a handheld power tool, a walking power tool, a pole power tool, or a garden power tool such as a string trimmer or a hedge trimmer. The type of the power tool is not limited in the present application. As long as the power tool can adopt the substantive content of the technical solutions disclosed below, the power tool is within the scope of the present application.

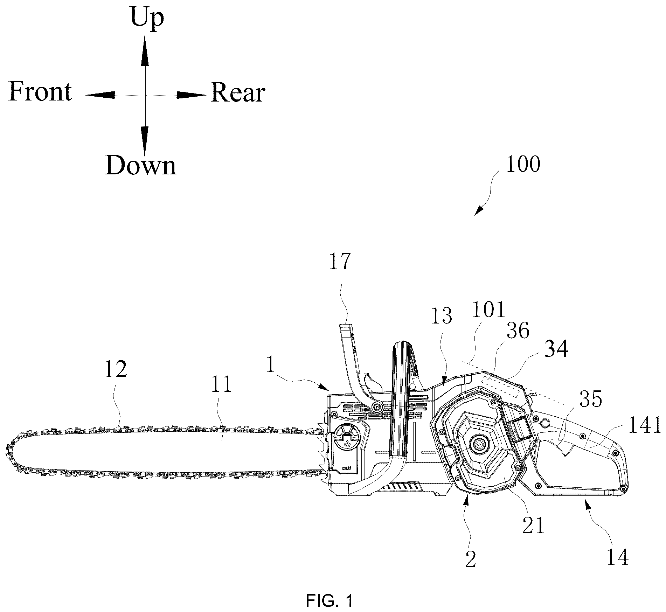

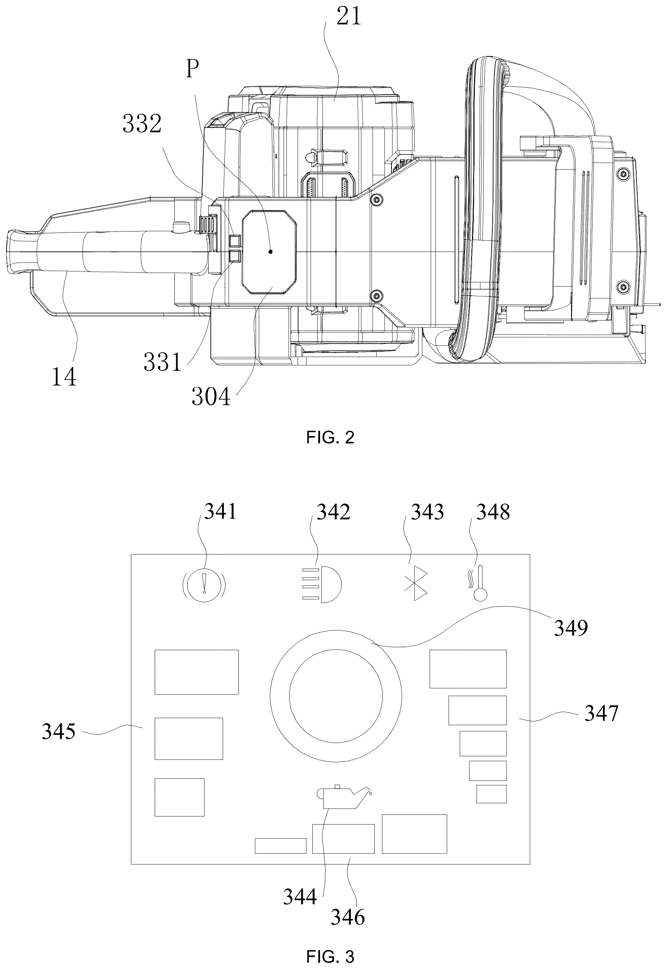

FIG. 1 is a side view of a chainsaw according to an example of the present application. FIG. 2 is a top view of a chainsaw according to an example of the present application. FIGS. 1 and 2 show a specific example of the power tool in the present application, such as a chainsaw. In fact, the present application can be applied to handheld power tools such as an electric drill, an electric wrench, an electric screwdriver, an electric hammer drill, an electric circular saw, and a sander, table tools such as a table saw, and outdoor tools such as a lawn mower, a snow thrower, a string trimmer, electric shears, a hedge trimmer, a chainsaw, and a pole saw. Apparently, the following examples are part, not all, of examples of the present application.

As shown in FIGS. 1 and 2, a chainsaw 100 includes a tool body 1 and a power supply device 2. The power supply device 2 is configured to supply energy to the tool body 1. The tool body 1 includes a working component, a body portion, and an electric motor. The working component includes a guide plate 11 and a chain 12. The body portion includes a housing, and the working component can be mounted to the front end of the body portion. One end of the guide plate 11 is supported on a housing 13, and the other end of the guide plate 11 extends out of the housing 13 along a longitudinal direction of the housing 13. The guide plate 11 supports and guides the chain 12. The electric motor is disposed in an accommodation space formed by the housing 13. The power supply device 2 supplies power to the electric motor so that the electric motor drives the chain 12 to rotate under the guide of the guide plate 11 to implement a cutting function. The power supply device 2 includes at least one battery pack 21, and the battery pack 21 is detachably connected to the housing 13 so that the user can replace the battery pack 21 conveniently, thereby extending the service life of the chainsaw 100.

In some examples, the housing 13 is formed with or connected to a handle 14 extending along a front and rear direction, and the handle 14 is formed with a grip 141 for the user to hold. The handle 14 is located behind the battery pack 21 in the front and rear direction so that the user holds the handle 14 conveniently and in conformity with ergonomics. A rear handle operating member 35 for the user to operate is provided at the front end of the handle 14. The rear handle operating member 35 is configured to control the chainsaw 100 to start or stop. The rear handle operating member 35 is disposed at a reasonable position that facilitates the operation of the user, improving the comfort of operation of the user.

In some examples, the chainsaw 100 further includes a display device 34. The display device 34 is at least partially located above the battery pack 21. The display device 34 is mounted to the housing 13 and has at least one display interface for displaying a current state of the chainsaw 100, fully utilizing the space on the housing 13 and preventing the battery pack 21 from blocking the display device 34. Specifically, the display device 34 is disposed above the battery pack 21, and a projection of the display device 34 on a bottom plane perpendicular to a plane of the guide plate 11 is at least partially located within a projection of the battery pack 21 on the bottom plane, thereby reducing a dimension of the chainsaw 100 in the front and rear direction and improving the structural compactness of the chainsaw 100. The display device 34 is disposed in front of the handle 14 in the front and rear direction. When the user holds the handle 14, the display device 34 faces the user, making it convenient for the user to view the display interface of the display device 34.

FIG. 3 is a schematic view of a display interface of a display device according to an example of the present application. As shown in FIG. 3, a brake state display region 341, a headlight working state display region 342, a Bluetooth connection state display region 343, a low oil volume warning display region 344, a cutting mode display region 345, an oil output display region 346, a cutting load display region 347, an over-temperature icon display region 348, and a battery level display region 349 are provided on the display interface of the display device 34. The cutting mode display region 345 displays three gears, where the first gear corresponds to one grid being on, the second gear corresponds to two grids being on, and the third gear corresponds to three grids being on. Five grids are provided in the cutting load display region 347, and the number of grids may be greater than 5 or less than 5, which is not specifically limited here. The number of grids being on varies at any time with the magnitude of a current of the electric motor during cutting of the chainsaw 100.

In an optional example, the display interface further includes a button indication region for indicating a working state of an operating button so that the user acquires the working state of the operating button in real time through the display interface, thereby helping the user to master the working state of the chainsaw in real time.

The chainsaw 100 further includes multiple operating elements for the user to operate. The operating elements include at least one operating button for triggering an operation control instruction. The operating button is disposed in a characteristic region of the handle 14, where the characteristic region is a region that can be operated by the user's hand holding the handle 14, facilitating the operation of the user. The operating elements are at least operable to adjust an oil output of the chainsaw 100 or a lighting state of the chainsaw 100. The operating elements include a first operating button 331 and a second operating button 332. The first operating button 331 is configured to control the lighting state of the chainsaw 100, that is, turn on or off a lighting module or adjust the lighting brightness of the lighting module. The second operating button 332 is configured to adjust the oil output of the chainsaw 100. In practical operation, when the first operating button 331 is lightly pressed once, a lighting function of the chainsaw 100 is activated, the brightness is maximum, and an icon of the headlight working state display region 342 is on. When the first operating button 331 is lightly pressed again, the lighting brightness is switched, and the icon display of the headlight working state display region 342 changes accordingly. When the first operating button 331 is lightly pressed again, the lighting is turned off, and the switching between three gears is cycled in this manner.

The chainsaw 100 further includes an loT module 36 configured to be communicatively connected to at least an external device to receive or send information related to the chainsaw, enabling the user to control or understand the state of the tool through the loT module 36.

Specifically, the first operating button 331 further has a Bluetooth connection function. When the first operating button 331 is long pressed, a Bluetooth pairing function is activated. In a pairing process, a Bluetooth icon in the Bluetooth connection state display region 343 flickers. After successful pairing, the Bluetooth icon is always on. When the Bluetooth function is deactivated, the Bluetooth icon is off. After the Bluetooth icon is always on, the external device can be communicatively connected to the tool body 1 or the battery pack 21 via Bluetooth. In some examples, the user can maintain and upgrade a program of the tool body 1 by operating the external device. In some examples, the external device communicates with the tool body 1 and the battery pack 21 in a bidirectional communication manner. In some examples, related data of the battery pack 21 and the tool body 1, such as related working states and warning information, can be uploaded to the external device via Bluetooth for reference of the user. In some examples, the user can control gears and other working modes of the chainsaw 100 through the external device.

In an optional example, the display device 34 includes at least a display plane 304. A projection of the display plane 304 on a first plane 101 at least partially overlaps a projection of the loT module 36 on the first plane 101. The first plane 101 is substantially parallel to the display plane 304, and the display plane 304 may be a reference plane of the display device 34. In another optional example, the display interface has a display center P, and the loT module 36 is at least partially located within a preset spherical region with the center being the display center P of the display interface and the radius being greater than or equal to 0 mm and less than or equal to 50 mm.

The external device 200 may be, but is not limited to, an electronic device having a communication function, such as a mobile phone, a tablet computer, or a personal computer. The information related to the chainsaw may include, but is not limited to, information that the user needs to acquire, such as the working state of the chainsaw such as a rotational speed of the chain and the state of the power supply device 2 such as the remaining power and an expected usage time of the power supply device 2. It is to be noted that the projection of the display plane 304 on the first plane may entirely or partially overlap the projection of the loT module 36 on the first plane so that an operating button for triggering an operation control instruction of the loT module 36 can be disposed near the operating buttons around the display device 34, achieving a more compact hardware layout, improving the integration of the chainsaw, and facilitating a decrease in the volume of the chainsaw.

Optionally, the direction in which the operating button is pressed is perpendicular or approximately perpendicular to the display plane 304, making it convenient for the user to adjust the machine while observing the state of the machine.

Optionally, a function prompt pattern is provided on a surface of the operating button, where the image-text content of the function prompt pattern is presented in a recessed, raised, or planar structure, so that the user knows the function of each operating button according to the function prompt pattern on the surface of the operating button. Thus, the user can quickly know the function of each operating button without referring to the product manual in real time, thereby helping the user to quickly master the usage of the chainsaw.

Optionally, the chainsaw further includes at least one control board, where the control board is configured to implement at least one of the following: processing the information related to the chainsaw, executing operation and protection control on the chainsaw, or controlling the display device 34 to perform display. The loT module 36 is provided with a UART interface, and the loT module 36 establishes a bidirectional communication connection with the control board through the UART interface.

A UART is configured to implement the bidirectional communication connection between the loT module 36 and the control board. Optionally, the loT module 36 may also implement a bidirectional communication connection with the power supply device 2 through the UART interface. Optionally, the loT module 36 may also implement a bidirectional communication connection with a control button through the UART interface. Optionally, a main control board and the battery pack 21 may communicate with each other through a D pin.

Optionally, the external device 200 is at least configured to set the oil output, lighting, and Bluetooth pairing of the chainsaw through the loT module 36 so that the user can control the oil output (oil output system 38), lighting (lighting system 37), Bluetooth pairing, and the like of the chainsaw through the external device 200. Optionally, the display interface is provided with a touch region configured to receive a touch input instruction so that the user can operate the chainsaw through the touch region of the display interface, thereby enriching the operations on the chainsaw and allowing the user to select a manner of operating the chainsaw according to usage habits.

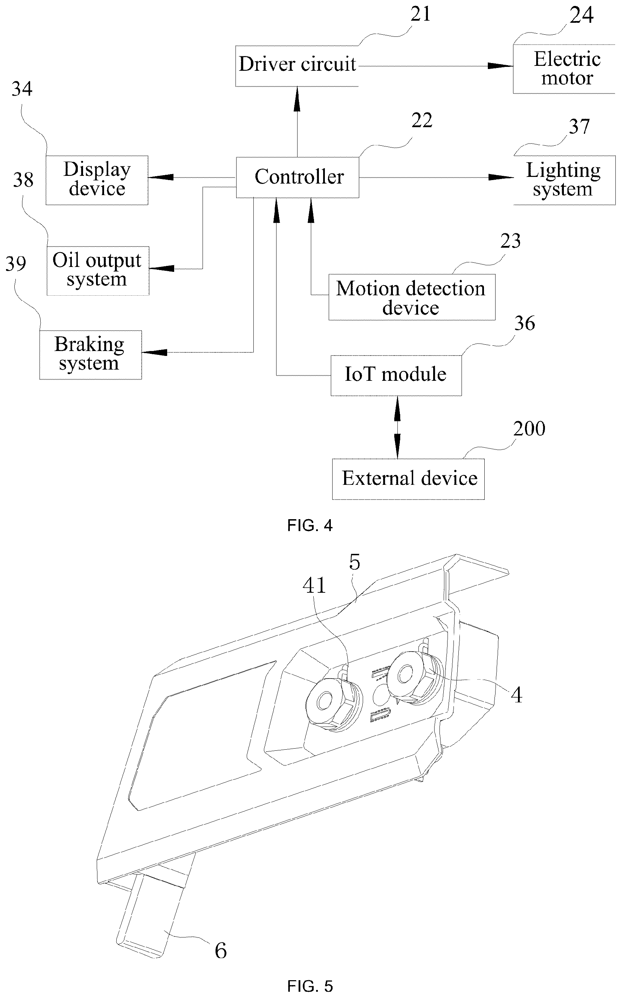

In an optional example, as shown in FIG. 4, the chainsaw 100 may further include a driver circuit 21, a controller 22, and a motion detection device 23. The driver circuit 21 is electrically connected to an electric motor 24 and configured to drive the electric motor 24 to operate. The controller 22 is accommodated in the housing 13 and electrically connected to the driver circuit 21 to control at least the operation of the electric motor 24. The motion detection device 23 is associated with the body portion or the working component, connected to the controller 22, and configured to detect a motion variation of the body portion or the working component in at least one direction. The controller 22 is configured to control the electric motor 24 to enter a braking process when the motion detection device 23 detects that the motion variation of the body portion or the working component in the at least one direction exceeds a preset condition.

The chainsaw is configured to be communicatively connected to the external device 200. The external device 200 is at least configured to allow the user to set information related to the preset condition. Alternatively, the controller 22 is further configured to control the electric motor to enter the braking process based on the acquired motion variation and a target control program set by the external device 200.

The motion detection device 23 may include, but is not limited to, a gyroscope and/or a linear accelerometer. The preset condition may be a range of allowed motion variations of the body portion or the working component in the at least one direction, which is input by the user through the external device 200, the display device 34, or the like.

Specifically, the user may set the information related to the preset condition through the external device 200. The motion detection device 23 may detect the motion variation of the body portion or the working component in the at least one direction. Thus, when the controller 22 acquires the preset condition and the motion detection device 23 detects that the motion variation of the body portion or the working component in the at least one direction exceeds the preset condition, the controller 22 controls the electric motor to enter the braking process so that when the operating state of the chainsaw is not within a preset range, the controller can automatically control the electric motor to enter the braking process, thereby improving the operational safety of the chainsaw during use.

In an exemplary example, the preset condition may include a preset speed condition and a preset angle condition. During forward cutting of the chainsaw, when a speed of the chainsaw in a direction Y exceeds the preset speed condition, the controller controls the electric motor to enter the braking process to shut down the chainsaw within a specified time. Moreover, when an angle of the chainsaw in the direction Y exceeds the preset angle condition, the controller controls the electric motor to enter the braking process to shut down the chainsaw within the specified time. In another optional example, during lateral cutting of the chainsaw, when a speed of the chainsaw in a direction X exceeds the preset speed condition, the controller controls the electric motor to enter the braking process to shut down the chainsaw within the specified time. Moreover, when an angle of the chainsaw in the direction X exceeds the preset angle condition, the controller controls the electric motor to enter the braking process to shut down the chainsaw within the specified time. In another exemplary example, when the user normally releases the rear handle operating member 35, the controller controls the electric motor to enter the braking process, or the chainsaw enters a normal braking process.

Optionally, the preset condition is related to a braking sensitivity, and the external device 200 is configured to set a braking sensitivity of a braking system 39 of the chainsaw 100 in a stepless adjustment manner. In an optional example, the braking sensitivity satisfies that the braking sensitivity is greater than or equal to 0 and less than or equal to 100%. When the braking sensitivity is 0, it means that an automatic braking function is disabled. Thus, the user may set the preset condition through the external device 200 to adjust a braking occasion and the braking sensitivity so that the chainsaw is suitable for customers with different requirements, improving the user experience.

Optionally, the target control program matches the braking sensitivity, and the external device 200 is configured to set the braking sensitivity in the stepless adjustment manner. In an optional example, the braking sensitivity satisfies that the braking sensitivity is greater than or equal to 0 and less than or equal to 100%. Thus, the user may set the preset condition through the external device 200 to adjust the braking occasion and the braking sensitivity so that the chainsaw is suitable for customers with different requirements, improving the user experience.

Optionally, the chainsaw of this example further includes the rear handle operating member 35, and the controller is further configured to acquire a first braking signal triggered by the rear handle operating member 35 and control, according to the first braking signal, the electric motor to enter the braking process.

The first braking signal may be a signal for controlling the electric motor to enter the braking process, which is triggered by the rear handle operating member 35. In an optional example, when the rear handle operating member 35 is released, the first braking signal is triggered.

Specifically, when the motion variation of the body portion or the working component of the chainsaw in the at least one direction exceeds a preset variation, the rear handle operating member 35 may trigger the first braking signal, and when acquiring the first braking signal, the controller may control, according to the first braking signal, the electric motor to enter the braking process.

Optionally, the chainsaw further includes a front baffle plate 17, and the controller is further configured to acquire a second braking signal triggered by the front baffle plate 17 and control, according to the second braking signal, the front baffle plate 17 to perform mechanical braking.

The second braking signal may be a signal for controlling the chainsaw to perform the mechanical braking, which is triggered by the front baffle plate 17. Specifically, when the motion variation of the body portion or the working component of the chainsaw in the at least one direction exceeds the preset variation, the front baffle plate 17 may trigger the second braking signal, and when acquiring the second braking signal, the controller may control, according to the second braking signal, the front baffle plate 17 to perform the mechanical braking.

Optionally, the external device 200 is further configured to allow the user to set a braking mode, where the braking mode includes any one or a combination of an automatic braking mode, a manual braking mode, and a mechanical braking mode. In an exemplary example, the user may set the braking mode to the automatic braking mode alone through the external device 200. In another exemplary example, the user may set the braking mode to the manual braking mode alone through the external device 200. In another optional example, the user may set the braking mode to the mechanical braking mode alone through the external device 200. In another optional example, when a chain speed of the chainsaw is higher than 18 m/s, traditional mechanical braking alone may no longer satisfy requirements. Therefore, the user can stop the electric motor within a short time through a combination of multiple braking modes. For example, the user may set the braking mode to a combination of the automatic braking mode and the manual braking mode through the external device 200, or the user may set the braking mode to a combination of the automatic braking mode, the manual braking mode, and the mechanical braking mode through the external device 200, so that the user can autonomously select the braking mode according to usage habits.

In an optional example, the chainsaw of this example further includes a control device electrically connected to at least the display device 34. The control device is configured to respond to any one of multiple preset instructions to light up the display interface.

The multiple preset instructions may include, but are not limited to, at least one of a button trigger instruction, a toggle trigger instruction, a hardware insertion/removal trigger instruction, or a remote trigger instruction.

Specifically, when the control device receives one or more of the button trigger instruction, the toggle trigger instruction, the hardware insertion/removal trigger instruction, or the remote trigger instruction from the user, the control device responds to the triggered instruction to light up the display interface so that the user does not need to manually light up the display interface of the display device 34, thereby preventing the user from manually lighting up the display interface and the resulting distraction and improving the safety of the chainsaw.

Optionally, the chainsaw further includes an operating member, where the operating member includes at least one of a button, a toggle, or a switch. The control device is configured to respond to a trigger instruction from any operating member.

In an exemplary example, when the user operates the button, the button trigger instruction is triggered so that when the user controls the chainsaw by operating the button, the control device may respond to the button trigger instruction to light up the display interface.

Optionally, the display device 34 is configured to be communicatively connected to the external device 200, and the external device 200 is at least configured to allow the user to light up or turn off the display interface and generate the remote trigger instruction based on an operation of the user.

In an exemplary example, when the user desires to light up the display interface, the user may generate the remote trigger instruction by operating the external device 200 so that the control device may respond to the remote trigger instruction to light up the display interface.

Optionally, the control device is further configured to detect an insertion/removal connection state of the power supply device 2 and generate the hardware insertion/removal trigger instruction based on the insertion/removal connection state so that the control device may light up the display interface according to the hardware insertion/removal trigger instruction.

In an optional example, the display interface has at least first display brightness and second display brightness; and the control device is configured to respond to any one of at least two preset instructions to control the display interface to switch from the first display brightness to the second display brightness.

It is to be noted that the above preset instructions are stored in a storage module inside the tool or on a terminal device. Specifically, the above preset instructions are multiple determined instructions set in advance.

In this example, the first display brightness and the second display brightness may be set according to actual requirements. If the first display brightness is set to 0 and the second display brightness is set to 100%, the control device may control the on/off of the display interface through brightness switching.

Optionally, the control device is configured to control the display interface to be off when a duration for which no operation is performed on the chainsaw reaches a preset time. Thus, when the user has no need to check the operating state of the chainsaw through the display device 34, the display interface is turned off, which is conducive to energy conservation and environmental protection and improves the economic efficiency of the chainsaw.

The preset time may be a time for turning off the display interface when no operation is performed, which is set by the user according to personal requirements. In an optional example, the display device 34 is configured to set the preset time in a stepless adjustment manner so that the user may set the preset time to any duration according to personal requirements, thereby satisfying the requirements of different users for display durations.

Optionally, the chainsaw further includes a photosensitive module integrated with the display device 34 or the housing 13, and the control device is configured to acquire light detection information from the photosensitive module and convert the light detection information into a first brightness adjustment instruction.

The photosensitive module may include, but is not limited to, a light sensor. The first brightness adjustment instruction may include the brightness of the display interface. When the brightness of the display interface is 0, the display interface may be turned off.

In an exemplary example, the greater a light intensity in the light detection information of the photosensitive module, the greater the brightness of the display interface in the first brightness adjustment instruction, so that the brightness of the display interface can be changed according to the intensity of ambient light. Thus, the user does not need to manually adjust the brightness of the display interface and can always see the display content clearly regardless of the ambient light, thereby protecting the user's eyes. Meanwhile, when the intensity of ambient light is relatively weak, the brightness of the display interface is controlled to decrease, which is conducive to energy conservation and environmental protection and improves the economic efficiency of the chainsaw.

In an optional example, the chainsaw further includes the operating member, where the operating member includes at least one of the button, the toggle, or the switch, and the control device is configured to acquire position detection information of the operating member and convert the position detection information into a second brightness adjustment instruction so that the user may adjust the brightness of the display interface through the button, the toggle, or the switch. In another optional example, the display device 34 is configured to be communicatively connected to the external device 200, and the external device 200 is at least configured to allow the user to set the brightness of the display interface so that the user may adjust the brightness of the display interface through the external device 200. Thus, the user can adjust the brightness of the display interface and select a manner of setting the brightness of the display interface according to personal preferences.

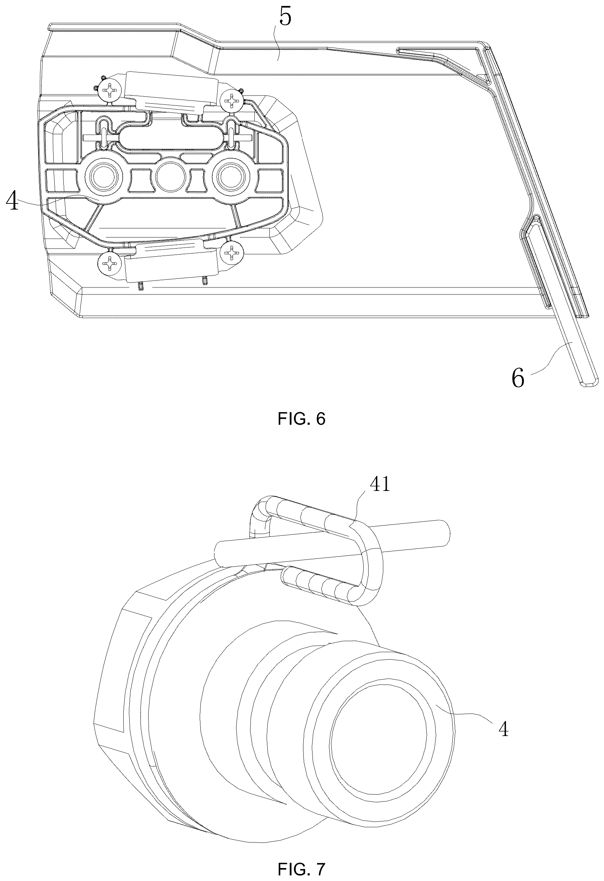

In some examples, as shown in FIGS. 5 to 8, the chainsaw further includes a nut anti-loss structure 4 disposed on a guide plate pressing cover plate 5, and the guide plate pressing cover plate 5 is used for fixing the guide plate 11. A pressing nut is connected to the guide plate pressing cover plate 5 through a spring steel wire 41, ensuring that the nut can be fastened to a bolt and the nut can be prevented from falling off and being lost during detachment.

In some examples, the chainsaw 100 further includes a chip baffle 6 mounted at the rear end of the guide plate pressing cover plate 5 and adjacent to the battery pack. The chip baffle 6 guides chip discharge and prevents wood chips from entering the battery pack; moreover, the chip baffle 6 prevents the falling chain from hitting the battery pack, thereby providing secondary protection for the battery pack.

Based on the same concept, this example further provides a power tool including a tool body or body portion, a power supply device, a motor, a working component or output portion or cutting portion, an electric motor, a driver circuit, a controller, and a motion detection device. The tool body includes a housing, and the front end of the tool body is configured for mounting the working component. The power supply device is detachably connected to the housing to supply power to the power tool. The motor is powered by the power supply device. The working component is mounted at the front end of the tool body and is driven by the motor to implement a cutting function of the power tool. The electric motor is accommodated in the housing and outputs power to drive the working component to work. The driver circuit is electrically connected to the electric motor and configured to drive the electric motor to operate. The controller is accommodated in the housing and electrically connected to the driver circuit to control at least the operation of the electric motor. The motion detection device is associated with the body portion or the working component, connected to the controller, and configured to detect a motion variation of the body portion or the working component in at least one direction. The power tool is configured to be communicatively connected to an external device. The external device is at least configured for a user to operate to enable or disable an automatic braking mode of the power tool. In the automatic braking mode, the controller can control the electric motor to enter a braking process based on the acquired motion variation.

Specifically, when the user operates the external device to enable the automatic braking mode, the controller can control the electric motor to enter the braking process based on the acquired motion variation. When the user operates the external device to disable the automatic braking mode of the power tool, the controller of the power tool cannot control the electric motor to enter the braking process based on the acquired motion variation. Thus, the user can enable or disable the automatic braking mode of the power tool according to personal requirements so that the power tool is suitable for users with any requirements, improving the universality of the power tool.

Optionally, the power tool further includes an loT module configured to be communicatively connected to at least the external device. The external device is configured to set a braking sensitivity of the automatic braking mode in a stepless adjustment manner so that the user can set different braking sensitivities of the automatic braking mode through the external device according to personal requirements for sensitivity. In an optional example, the braking sensitivity satisfies that the braking sensitivity is greater than or equal to 0 and less than or equal to 100% so that the power tool is suitable for users with different requirements, further improving the universality of the power tool.

Optionally, the power tool in this example may further include a display device mounted to the housing and configured to display an operating state of the power tool; and the loT module is configured to be communicatively connected to at least the external device to receive or send information related to the power tool. The display device includes at least a display interface. The loT module is at least partially located within a preset spherical region with the center being a display center of the display interface and the radius being greater than or equal to 0 mm and less than or equal to 50 mm so that an operating button for triggering an operation control instruction of the loT module can be disposed near operating buttons around the display device, achieving a more compact hardware layout, improving the integration of a chainsaw, and facilitating a decrease in the volume of the chainsaw.

Optionally, in this example, the display interface may be configured to display an operating state of the chainsaw. The power tool further includes a control device configured to respond to any one of multiple preset instructions to light up the display interface.

The multiple preset instructions may include, but are not limited to, at least one of a button trigger instruction, a toggle trigger instruction, a hardware insertion/removal trigger instruction, or a remote trigger instruction.

Specifically, when the control device receives one or more of the button trigger instruction, the toggle trigger instruction, the hardware insertion/removal trigger instruction, or the remote trigger instruction from the user, the control device responds to the triggered instruction to light up the display interface so that the user does not need to manually light up the display interface of the display device 34, thereby preventing the user from manually lighting up the display interface and the resulting distraction and improving the safety of the power tool.

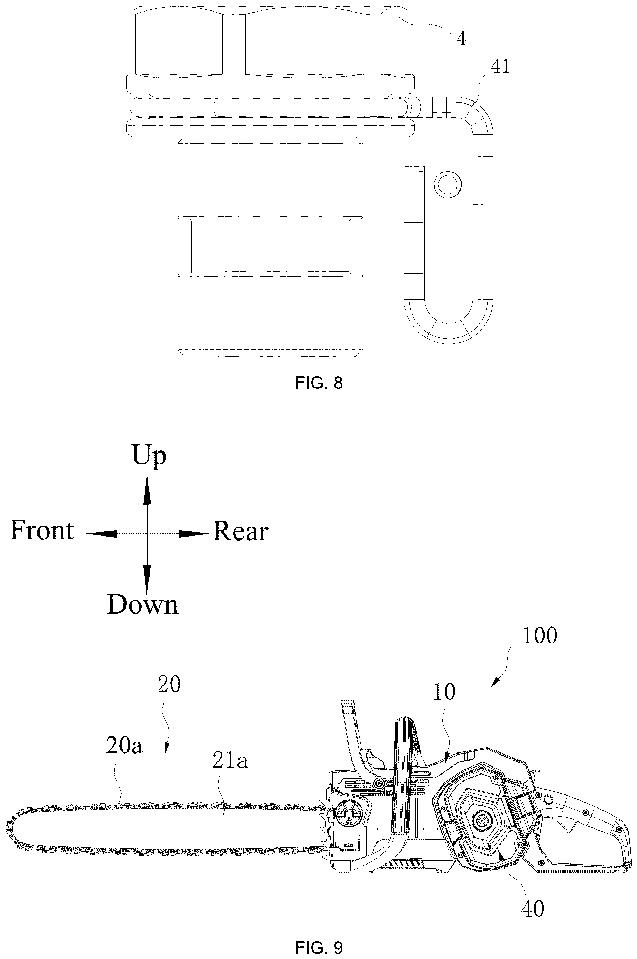

FIG. 9 shows a power tool 100 as an example of the present application. The power tool 100 shown in FIG. 9 is a chainsaw 100a. In other examples, power tools 100 may be other types of handheld power tools 100 such as a circular saw, an electric drill, and an impact wrench, table tools 100 such as a miter saw and a table saw, or outdoor power apparatuses 100 such as a lawn mower and a snow thrower. The chainsaw 100a is mainly exemplified hereinafter. However, it is to be understood that the power tool 100 to which the technical solutions of the present application are applied is not limited to the chainsaw 100a or the preceding types of tools.

Referring to FIGS. 9 to 11, the power tool 100 includes a housing 10, a functional piece 20, an electric motor 30, and a power supply device 40. The housing 10 constitutes a body of the power tool 100, connects or supports the preceding components, and forms an accommodation space capable of accommodating or partially accommodating the preceding components. The functional piece 20 is a component of the power tool 100 that actually performs an operation such as cutting, fastening, grinding, or impacting. In this example, the functional piece 20 of the chainsaw 100a is a chain 20a. The chain 20a and a guide plate 21a may constitute a working component mounted on a front portion of the chainsaw 100a. The guide plate 21a extends forward from the front end of the housing 10, and the chain 20a is disposed around the periphery of the guide plate 21a. During operation of the chainsaw 100a, the chain 20a rotates around the guide plate 21a to cut target pieces such as wood and metal. The power tool 100 generally further includes an operating member for the user to operate to start or stop the electric motor 30 described below, without excluding some cases where no operating member is provided and the electric motor is directly started after a power line is connected to mains electricity or after a battery pack is inserted.

The electric motor 30 is a prime mover of the power tool 100. When a motor shaft of the electric motor 30 rotates, the functional piece 20 can be driven directly or driven indirectly through a transmission assembly. In this example, the rotating motor shaft drives, directly or indirectly through the transmission assembly, the chain 20a to move around the guide plate 21a to perform the cutting operation. In some examples, the electric motor 30 may be a brushless electric motor 30. The power supply device 40 provides electrical energy for the power tool 100 and supplies power to at least the electric motor 30 and a controller 50 described below, that is, the power supply device 40 is electrically connected to the electric motor 30 and the controller 50 described below. It is to be noted that electronic circuits for transmitting electrical energy instead of electronic circuits for transmitting data and information are described here. In some examples, the power supply device 40 may be a battery pack detachably connected to the power tool 100 such as the chainsaw 100a. In some other examples, the power tool 100 such as the chainsaw 100a may be powered by mains electricity or an alternating current power supply in conjunction with a power adapter or related circuits such as a transformer circuit, a rectifier circuit, and a voltage regulator circuit.

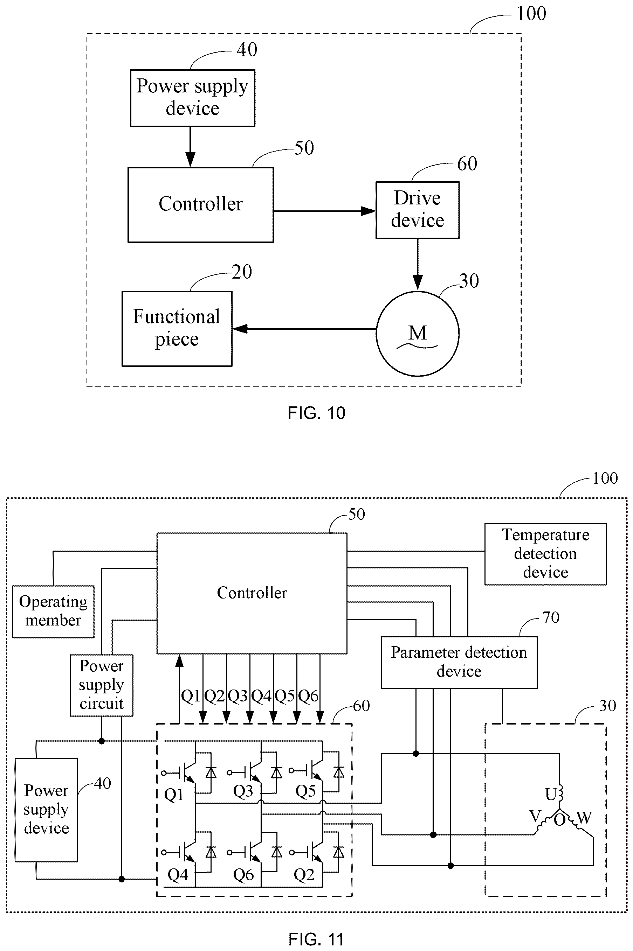

Referring to FIGS. 10 and 11, in addition to the housing 10, the functional piece 20, the electric motor 30, and the power supply device 40, the power tool 100 further includes the controller 50 configured to control the electric motor 30 to operate. The controller 50 may be a microcontroller unit (MCU), an Advanced Reduced Instruction Set Computing Machine (ARM), a digital signal processor (DSP), or the like and controls the operation of the electric motor 30 by executing relevant programs. Generally, the controller 50 outputs corresponding control signals to the electric motor 30 so that the electric motor 30 operates at a desired rotational speed in a desired direction. Typically, to drive the electric motor 30 to operate normally, the power tool 100 further includes a drive device 60 such as an inverter bridge or an integrated driver chip. The drive device 60 is electrically connected to the controller 50 and the electric motor 30 and receives control signals from the controller 50 to output corresponding drive signals to the electric motor 30. In some cases, the power tool 100 may further include a parameter detection device 70 configured to detect parameters such as the rotational speed, torque, and rotor position of the electric motor 30. The controller 50 may require the above parameters from the parameter detection device 70 to control the operation of the electric motor 30. On this basis, the controller 50 executes relevant control programs to control the rotational speed of the electric motor and a speed change process. For example, the controller 50 may control the electric motor 30 to accelerate to a set rotational speed at a set acceleration. Of course, the controller 50 may also control the rotational speed of the electric motor to change in a nonlinear manner or another complex manner.

To clarify the following technical solutions, a startup process of the power tool 100 is described below. After the tool is started by the user, the power supply device 40 supplies power to the controller 50. At an initial stage of power supply, although the controller 50 has received electrical energy from the power supply device 40, the controller 50 has not yet communicated with the power supply device 40 and cannot obtain power parameter information of the power supply device 40 such as model, capacity, voltage, and the number of parallel cells. The controller 50 begins to control the startup of the electric motor 30 without power parameters. However, after a short time, the controller 50 may exchange the power parameter information with the power supply device 40. In view of the related problems described above in the startup process, to ensure the service life and safety of the power tool 100 and the battery pack 40 assembled therein and improve the user experience during tool startup, the present application provides a more targeted and effective startup control solution for the electric motor 30 of the power tool 100.

The controller 50 of the power tool 100 is configured to control the startup of the electric motor 30 in a first startup mode when the electric motor 30 is started for the first time after power-on and control the startup of the electric motor 30 in a second startup mode when the electric motor 30 is not started for the first time after power-on. A first startup acceleration of the electric motor 30 in the first startup mode is lower than a second startup acceleration of the electric motor 30 in the second startup mode.

In this example, the case where the controller 50 starts the electric motor 30 for the first time after power-on refers to the case where the power tool 100 is turned on after the whole machine is powered off, for example, each time the power tool 100 starts to be used. In this case, the controller 50 has not communicated with the power supply device 40 and has no power parameter information before starting the electric motor 30. The case where the controller 50 starts the electric motor 30 not for the first time after power-on refers to the case where the whole machine is not powered off, the controller 50 is not powered off, and the electric motor 30 is powered off or stops rotating, for example, the case where a trigger is briefly released and pressed again during use of the power tool 100. In this case, before restarting the electric motor 30, the controller 50 has already communicated with the power supply device 40 and has the power parameter information.

The controller 50 adopts different startup modes in the above two startup cases. A difference between the first startup mode adopted when the electric motor 30 is started for the first time and the second startup mode adopted when the electric motor 30 is not started for the first time is that, at least in the initial stage, the first startup acceleration of the electric motor 30 in the first startup mode is lower than the second startup acceleration of the electric motor 30 in the second startup mode. Specifically, it is assumed that in the first startup mode, the controller 50 controls the rotational speed of the electric motor to increase from zero to a target rotational speed at the first startup acceleration, and in the second startup mode, the controller 50 controls the rotational speed of the electric motor to increase from zero to the target rotational speed at the second startup acceleration, where the first startup acceleration is lower than the second startup acceleration.

In the above examples, in the case where relevant information such as the capacity of the battery pack and the ambient temperature is unknown, the power tool 100 can achieve the startup of the electric motor 30 in a relatively smooth process so that the user can gradually adapt to the hand feel of the tool, and hazards to the safety and the service life can be avoided, such as a large current causing a voltage drop of the battery pack. In the case where the electric motor 30 is not started for the first time, since the power tool 100 is not in a complete power-off state, the power supply device 40 still supplies electrical energy externally, and the battery pack has already warmed up, a relatively fast startup process of the electric motor 30 no longer threatens the safety and service lives of the tool and the battery pack. Moreover, the relevant information such as the capacity of the battery pack and the ambient temperature may be already acquired, and the electric motor 30 may be started in a manner corresponding to the relevant information. Additionally, the battery pack has already warmed up and the user has become accustomed to the hand feel of the tool.

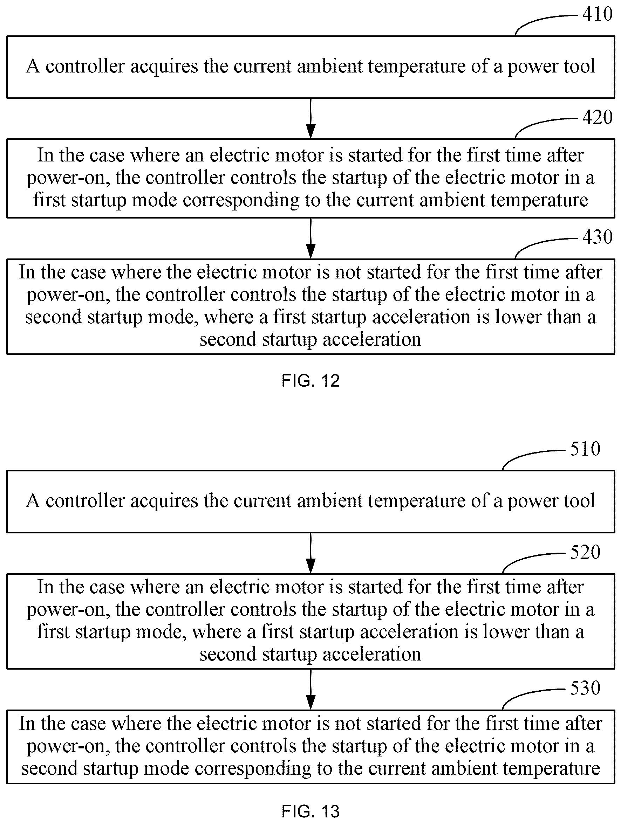

In some examples, referring to FIG. 12, which is a flowchart of a control scheme of the controller 50 starting the electric motor 30 in the power tool 100, the control scheme specifically includes 410 to 430.

In 410, the controller 50 acquires the current ambient temperature of the power tool 100.

In 420, in the case where the electric motor 30 is started for the first time after power-on, the controller 50 controls the startup of the electric motor 30 in the first startup mode corresponding to the current ambient temperature.

In 430, in the case where the electric motor 30 is not started for the first time after power-on, the controller 50 controls the startup of the electric motor 30 in the second startup mode, where the first startup acceleration is lower than the second startup acceleration.

In the first startup mode corresponding to the current ambient temperature, the speed change process when the controller 50 controls the startup of the electric motor 30 is related to the ambient temperature. Specifically, the first startup acceleration of the electric motor 30 in the first startup mode corresponding to the current ambient temperature is related to the ambient temperature. In some examples, the first startup acceleration is positively correlated to the ambient temperature. The lower the ambient temperature, the lower the first startup acceleration and the smoother the startup of the electric motor 30 in the first startup mode. The higher the ambient temperature, the higher the first startup acceleration and the faster the startup of the electric motor 30 in the first startup mode. A positive correlation between the first startup acceleration and the ambient temperature may be linear or nonlinear, which may be specifically determined depending on a tool type, a working condition, and other requirements of practical scenarios. In some other examples, the first startup acceleration has two different values depending on whether the ambient temperature is lower than a first temperature threshold, where the smaller value is selected when the ambient temperature is lower than the first temperature threshold, and the larger value is selected when the ambient temperature exceeds the first temperature threshold.

In some other examples, referring to FIG. 13, which is a flowchart of another control scheme of the controller 50 starting the electric motor 30 in the power tool 100, the control scheme specifically includes 510 to 530.

In 510, the controller 50 acquires the current ambient temperature of the power tool 100.

In 520, in the case where the electric motor 30 is started for the first time after power-on, the controller 50 controls the startup of the electric motor 30 in the first startup mode, where the first startup acceleration is lower than the second startup acceleration.

In 530, in the case where the electric motor 30 is not started for the first time after power-on, the controller 50 controls the startup of the electric motor 30 in the second startup mode corresponding to the current ambient temperature.

In the second startup mode corresponding to the current ambient temperature, the speed change process when the controller 50 controls the startup of the electric motor 30 is related to the ambient temperature. Specifically, the second startup acceleration is positively correlated to the ambient temperature. The lower the ambient temperature, the lower the second startup acceleration; and the higher the ambient temperature, the higher the second startup acceleration. A positive correlation between the second startup acceleration and the ambient temperature may be linear or nonlinear, which may be specifically determined depending on the tool type, the working condition, and other requirements of practical scenarios. Alternatively, the second startup acceleration has two different values depending on whether the ambient temperature is lower than a second temperature threshold, where the smaller value is selected when the ambient temperature is lower than the second temperature threshold, and the larger value is selected when the ambient temperature exceeds the second temperature threshold.

Various selectable implementations exist where the controller 50 acquires the current ambient temperature of the power tool 100. In an example, the controller 50 may obtain the current ambient temperature by detecting an electrical parameter of a thermosensitive element in the related circuit. Specifically, the controller 50 may obtain the current ambient temperature by converting a parameter such as the resistance, voltage, or current of a negative temperature coefficient (NTC) element on a metal-oxide-semiconductor (MOS) board according to temperature characteristics of the NTC element. In some other examples, the controller 50 may acquire the ambient temperatures at other temperature measurement points through other types of temperature sensors.

It is described in the above two examples that when the electric motor 30 is started or not started for the first time after power-on, the controller 50 may take the ambient temperature as an independent variable in the motor startup strategy, and parameters such as the startup acceleration in the first or second startup mode are adjusted as dependent variables accordingly. When both the first startup acceleration and the second startup acceleration are positively correlated to the ambient temperature, their respective mapping relationships with the ambient temperature may be different to adapt to the effects of the ambient temperature in different motor startup situations.

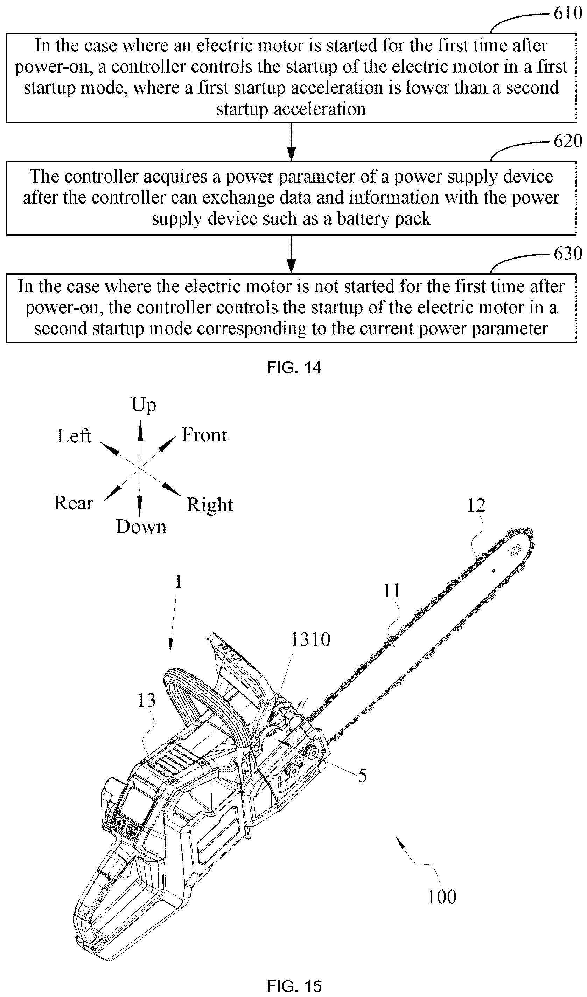

In some examples, referring to FIG. 14, which is a flowchart of another control scheme of the controller 50 starting the electric motor 30 in the power tool 100, the control scheme specifically includes 610 to 630.

In 610, in the case where the electric motor 30 is started for the first time after power-on, the controller 50 controls the startup of the electric motor 30 in the first startup mode, where the first startup acceleration is lower than the second startup acceleration.

In 620, the controller 50 acquires a power parameter of the power supply device 40 after the controller 50 can exchange data and information with the power supply device 40 such as the battery pack.

In 630, in the case where the electric motor 30 is not started for the first time after power-on, the controller 50 controls the startup of the electric motor 30 in the second startup mode corresponding to the current power parameter.

In the second startup mode corresponding to the current power parameter, the speed change process when the controller 50 controls the startup of the electric motor 30 is related to the power parameter. The power parameter includes, but is not limited to, one or more of the model, capacity, voltage, or number of parallel cells of the power supply device 40 such as the battery pack. In some examples, the controller 50 may pre-store other power parameters with correspondence relationships with the power parameter such as the model of the power supply device 40.

Various selectable implementations exist where the speed change process when the controller 50 controls the startup of the electric motor 30 in the second startup mode is related to the power parameter of the power supply device 40. In some examples, the second startup acceleration of the electric motor 30 in the second startup mode corresponding to the current power parameter is related to the power parameter. In some examples, the second startup acceleration may be positively correlated to the capacity and/or the number of parallel cells of the power supply device 40. The smaller the capacity and/or the number of parallel cells of the battery pack, the lower the second startup acceleration; and the larger the capacity and/or the number of parallel cells of the battery pack, the higher the second startup acceleration. A positive correlation between the second startup acceleration and the capacity and/or the number of parallel cells of the battery pack may be linear or nonlinear. In some other examples, the second startup acceleration may be related to an operation value of one or more of the capacity, voltage, and number of parallel cells and other power parameters, such as a weighted sum or another nonlinear relationship, which may be specifically determined depending on the tool type, the working condition, and other requirements of practical scenarios.

In some other examples, after the controller 50 obtains the power parameter of the power supply device 40, if the startup process of the electric motor 30 for the first time in the first startup mode is not completed, the controller 50 may switch to the second startup mode to control the electric motor 30 to continue being started. Specifically, it is assumed that when the electric motor 30 is started for the first time after power-on, the controller 50 controls the rotational speed of the electric motor 30 to increase to the target rotational speed at the first startup acceleration. When the electric motor 30 is accelerated to the target rotational speed at the first startup acceleration, if the controller 50 exchanges with the battery pack 40 to obtain the power parameter such as the capacity and the number of parallel cells of the battery pack, the controller 50 controls the electric motor 30 to continue accelerating from the current rotational speed to the target rotational speed at the second startup acceleration.

It is to be understood that the multiple examples described above illustrate the concept of the solutions of the present application, and other derived solutions can be obtained from cross combinations of the preceding examples or partial contents in the preceding examples. In an example, when the electric motor 30 is started for the first time after power-on, the controller 50 may smoothly start the electric motor 30 at the first startup acceleration lower than the second startup acceleration, without considering the ambient temperature, and when the electric motor 30 is not started for the first time after power-on, the controller 50 may quickly start the electric motor 30 at the second startup acceleration directly proportional to the number of parallel cells of the battery pack, which has been acquired currently. In another example, when the electric motor 30 is started for the first time after power-on, the controller 50 may smoothly start the electric motor 30 at the first startup acceleration lower than the second startup acceleration and directly proportional to the current ambient temperature, and when the electric motor 30 is not started for the first time after power-on, the controller 50 may quickly start the electric motor 30 at the second startup acceleration directly proportional to the capacity of the battery pack, which has been acquired currently. In another example, when the electric motor 30 is started for the first time after power-on, the controller 50 may smoothly start the electric motor 30 at the first startup acceleration lower than the second startup acceleration, and after the controller 50 obtains the power parameter such as the number of parallel cells of the battery pack through exchange, if the startup of the electric motor 30 for the first time at the first startup acceleration is not completed, the controller 50 completes the remaining startup of the electric motor 30 for the first time at the second startup acceleration directly proportional to the number of parallel cells of the battery pack.

FIG. 15 shows a chainsaw 100 as an example of the present application. Meanwhile, directions in the present application, including a front side, a rear side, an upper side, a lower side, a left side, and a right side, are further defined in FIG. 15.

Referring to FIGS. 15 to 17, the chainsaw 100 may include a tool body 1 and a power supply device. The power supply device is configured to supply energy to the tool body 1. The tool body 1 includes a guide plate 11, a chain 12, a housing 13, and a motor 36. The guide plate 11 supports and guides the chain 12. One end of the guide plate 11 is supported by the housing 13, and the other end of the guide plate 11 extends forward out of the housing 13 along a longitudinal direction of the housing 13. The motor 36 is disposed in an accommodation space formed by the housing 13. The power supply device supplies power to the motor 36 so that the motor 36 drives, directly or indirectly through a transmission mechanism, the chain 12 to rotate under the guide of the guide plate 11 to implement a cutting function.

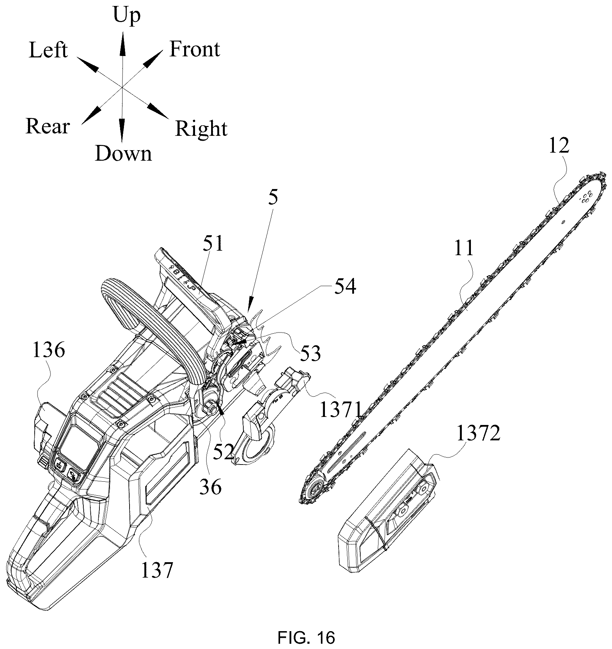

As shown in FIG. 16, the housing 13 of the chainsaw 100 may include a left housing 136 and a right housing 137 and further include a brake cover plate 1371 and a sprocket cover plate 1372, which have certain connection and fixation relationships with the right housing 137. The chainsaw 100 further includes a braking mechanism 5 partially accommodated between the right housing 137 and the brake cover plate 1371 and related components such as the guide plate 11 and the chain 12, which are partially accommodated between the brake cover plate 1371 and the sprocket cover plate 1372. It is to be understood that the left-right relationship between the left housing 136 and the right housing 137 is relative and intended to indicate that the braking mechanism 5 and a sprocket portion of the chainsaw 100 are located on the same side of the chainsaw 100 in a left and right direction so that the braking mechanism 5 and the related components of the sprocket portion such as the guide plate 11 and the chain 12 are mounted and maintained more efficiently and conveniently. Of course, the braking mechanism 5 of the chainsaw 100 may be disposed at other positions in other arrangement manners, and the left housing 136 and the right housing 137 may be integrally formed.

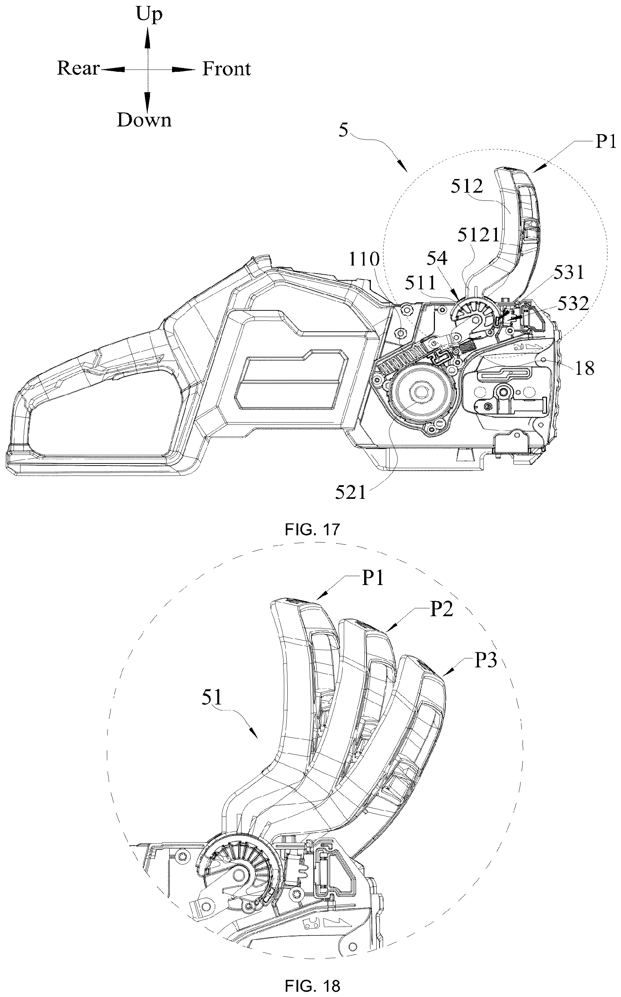

As shown in FIGS. 16 and 17, the braking mechanism 5 is configured to brake the motor 36 and may include a brake operating member 51 and a mechanical brake 52. The brake operating member 51 may be operated by the user so that the chainsaw 100 implements a braking function. The mechanical brake 52 may mechanically brake the chainsaw 100 in response to the rotation of the brake operating member 51. In some examples, the brake operating member 51 is a brake baffle 51. When the brake baffle 51 is pushed beyond a particular position, the mechanical brake is triggered.

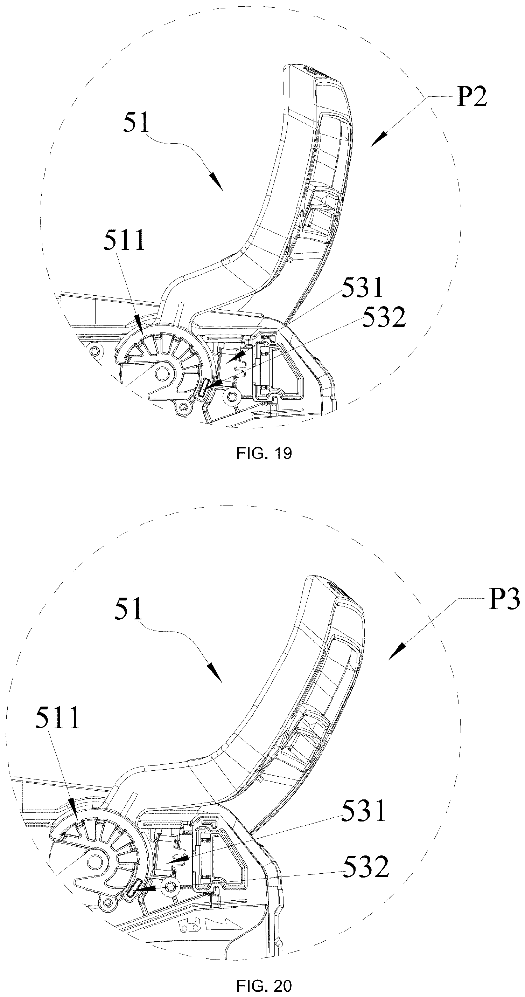

As shown in FIG. 15, the housing 13 of the chainsaw 100 is provided with a through hole 1310, and the brake operating member 51 is rotatably connected to the housing 13 through the through hole 1310. When operated by the user, the brake operating member 51 rotates relative to the through hole 1310 and the surrounding housing 13 within the through hole 1310 and forms a rotating portion 511. Referring to FIGS. 17 to 22, a certain gap exists between the rotating portion 511 of the brake operating member 51 and the housing 13 surrounding the through hole 1310, and thus the accommodation space formed by the housing 13 cannot be closed near this position. Therefore, as shown in FIG. 17, in the present application, a stop 54 for closing the gap between the rotating portion 511 and the housing 13 surrounding the through hole 1310 is provided on a surface of the rotating portion 511 of the chainsaw 100. The stop 54 enables the accommodation space formed by the housing 13 to be closed near the through hole 1310 during rotation of the brake operating member 51, thereby significantly reducing an amount of wood chips entering the chainsaw 100 in the working process of the chainsaw 100. In some examples, the through hole 1310 on the housing 13 may be opened along an up and down direction. In some other examples, the through hole 1310 on the housing 13 may be opened along the left and right direction.

In some examples, as shown in FIGS. 17, 21, and 22, the brake operating member 51 includes the rotating portion 511 and an operating portion 512. The rotating portion 511 is rotatably connected to the right housing 137 and is at least partially accommodated in the accommodation space formed by the housing 13, and a portion of the rotating portion 511 not located within the accommodation space of the housing 13 is exposed out of the housing 13 through the through hole 1310. In some cases, the rotating portion 511 is, in fact, partially accommodated in an accommodation space formed by the housing 13 and the brake cover plate 1371 and partially exposed out of the housing 13. In some examples, the rotating portion 511 may be disc-shaped or sector-shaped. In some other examples, the rotating portion 511 may be ring-shaped or partially ring-shaped. An end portion 5121 of the operating portion 512 is connected to the rotating portion 511 through the through hole 1310. Commonly, the operating portion 512 of the brake baffle 51 includes a baffle body and a leg, and the end portion 5121 of the operating portion 512 is an end portion of the leg. In some examples, the brake baffle 51 may have a single leg. In some other examples, the brake baffle 51 may have two legs arranged on the left side and the right side of the chainsaw 100 respectively. The stop 54 is disposed on a surface of the rotating portion 511 at a connection between the rotating portion 511 and the operating portion 512. Edges of the stop 54 are at least partially located within the accommodation space of the housing 13 so that the surface range of the rotating portion 511 covered by the stop 54 can always fill the through hole 1310 during rotation of the brake operating member 51.

In some examples, as shown in FIGS. 15, 16, and 22, the brake operating member 51 includes a left rotating portion 511a rotatably connected to the left housing 136 and a right rotating portion 511b rotatably connected to the right housing 137. The operating portion 512 of the brake operating member 51 has a left end portion 512a connected to the left rotating portion 511a and a right end portion 512b connected to the right rotating portion 511b. Specifically, the brake baffle 51 has two legs arranged on the left side and the right side of the chainsaw 100 respectively, and end portions of left and right legs are connected to the left rotating portion and the right rotating portion rotatably connected to the left housing and the right housing of the chainsaw 100, respectively. In some examples, specific positions of and a connection manner between the left rotating portion 511a and the left end portion 512a on the chainsaw 100 may be different from specific positions of and a connection manner between the right rotating portion 511b and the right end portion 512b on the chainsaw 100. For example, a through hole 1310a at the connection between the left rotating portion 511a and the left end portion 512a may be a through hole along the left and right direction, and a through hole 1310b at the connection between the right rotating portion 511b and the right end portion 512b may be a through hole along the up and down direction. Considering that wood chips mainly come from the proximity of the chain 12, the stop 54 may be disposed only on the surface of the right rotating portion 511b on the same side as the sprocket portion to close the gap between the right rotating portion 511b and the through hole 1310b. Additionally, compared with the single leg, the above design better facilitates detachment and wood chip cleaning.

In some examples, the stop 54 may be a sponge 54 attached to the surface of the rotating portion 511 or made of another material similar to the sponge and having certain elasticity and wear resistance. As shown in FIGS. 17 to 22, with the sponge 54 as an example, if the stop 54 is attached to the surface of the rotating portion 511, the sponge 54 may include a sponge layer 541 in contact with the housing 13 surrounding the through hole 1310 and an adhesive layer 542 bonded to the surface of the rotating portion 511. Specifically, the sponge layer 541 may be a sponge body, and the adhesive layer 542 may be a sponge adhesive backing. In some examples, a surface area of the rotating portion 511 covered by the adhesive layer 542, that is, a surface area of the adhesive layer 542, may be greater than a surface area of the sponge layer 541, so as to ensure firm adhesion between the sponge 54 and the rotating portion 511 and prevent the housing 13 from scraping the adhesive layer 542.

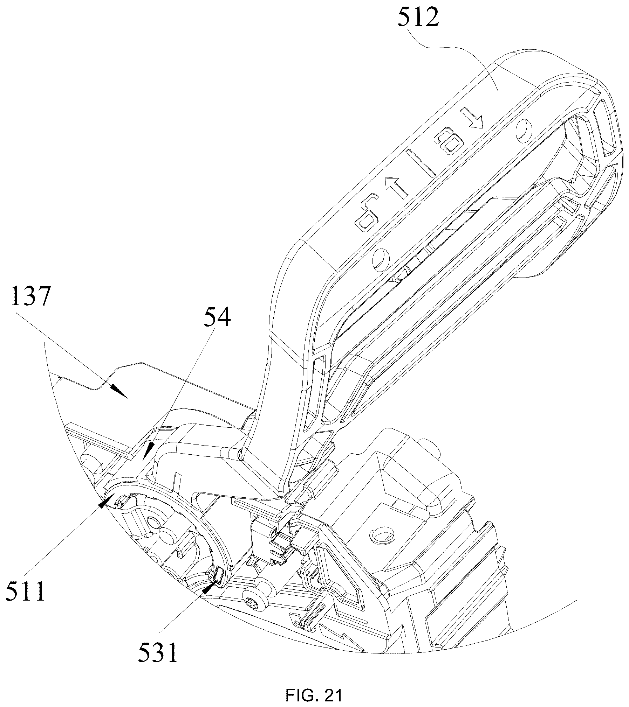

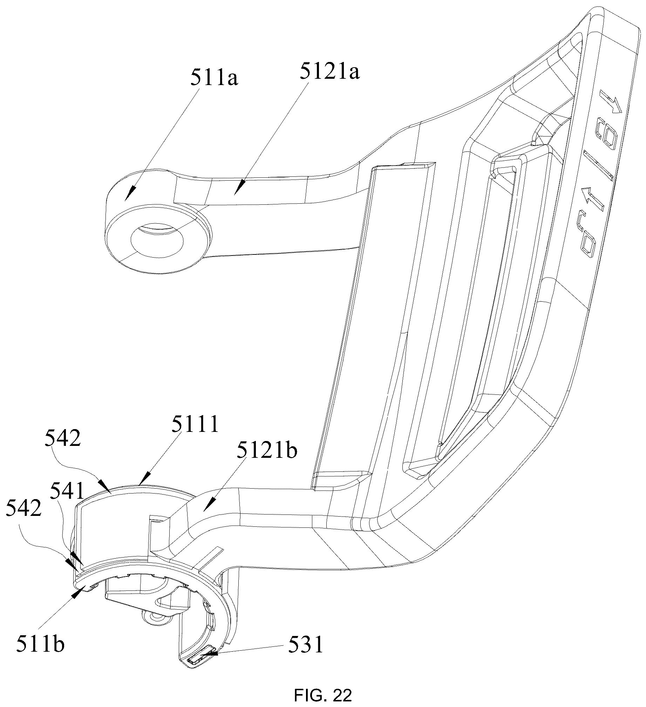

As shown in FIGS. 21 and 22, edges of the sponge layer 541 and the adhesive layer 542 at least partially extend into the accommodation space of the housing 13 and are partially located near the connection between the rotating portion 511 and the end portion 5121 of the operating portion 512. Protective ribs 5111 fitted with the edges or part of the edges of the adhesive layer 542 may be provided on the surface of the rotating portion 511. The protective ribs 5111 at least partially extend into the accommodation space of the housing 13, and the height of the protective ribs 5111 relative to the surface of the rotating portion 511 is higher than the height of the adhesive layer 542 relative to the surface of the rotating portion 511 and lower than the height of the sponge layer 541 relative to the surface of the rotating portion 511. Thus, during rotation of the brake operating member 51, the housing 13 surrounding the through hole 1310 cannot directly scrape the adhesive layer 542 due to the presence of the protective ribs 5111. Even when the brake operating member 51 resets after rotating to a limit position, the housing 13 rubs against only the protective ribs 5111 instead of scraping the adhesive layer 542 of the sponge 54, thereby avoiding a failure of the sponge 54 caused by the adhesive layer 542 being peeled off by the housing 13.

In some examples, as shown in FIGS. 16 and 17, the mechanical brake 52 may include a connector connected to the rotating portion 511 of the brake operating member 51 and capable of converting the rotation of the rotating portion 511 into power for triggering the mechanical brake, a second return spring 110 connected to the connector and capable of resetting the brake operating member 51 after the loss of an external force, and a mechanical braking member 521 connected to the second return spring 110 and capable of mechanically restricting the chain 12 to deceleration and stop. Specifically, in this example, the connector includes a crank connected to the rotating portion 511 and a connecting rod connected to the crank. The mechanical braking member 521 includes a braking steel belt connected to the second return spring 110 and a brake disc connected to an output shaft of the chainsaw 100 and affected by the braking steel belt to decelerate and stop the chain 12. In some examples, the mechanical brake 52 further includes a first return spring 18. Both the first return spring 18 and the second return spring 110 can reset the brake operating member 51 after the loss of the external force so that the brake operating member 51 can still be reset even if one return spring fails, ensuring the normal operation of the chainsaw 100.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A chainsaw, comprising:
a working component comprising a guide plate and a chain;
a body portion comprising a housing, wherein a front end of the body portion is configured for mounting the working component;
an electric motor accommodated in the housing and output power to drive the working component to work;
a power supply device detachably connected to the housing to provide electrical energy for the chainsaw;
a display device mounted to the housing and having a display interface for displaying an operating state of the chainsaw; and
a control device electrically connected to at least the display device;
wherein
the control device is configured to respond to any one of a plurality of preset instructions to light up the display interface.

2. The chainsaw according to claim 1, wherein the plurality of preset instructions comprise at least two of a button trigger instruction, a toggle trigger instruction, a hardware insertion/removal trigger instruction, a touch input instruction, or a remote trigger instruction.

3. The chainsaw according to claim 2, wherein the display device is provided with a touch region configured to receive the touch input instruction.

4. The chainsaw according to claim 2, further comprising an operating member, wherein the control device is configured to light up the display interface in response to an instruction output from the operating member.

5. The chainsaw according to claim 4, wherein the operating member comprises at least one of a button, a toggle, or a switch.

6. The chainsaw according to claim 2, wherein the display device is configured to be communicatively connected to an external device, and the external device is at least configured to allow a user to light up or turn off the display interface and generate the remote trigger instruction based on an operation of the user.

7. The chainsaw according to claim 2, wherein the control device is further configured to detect an insertion/removal connection state of the power supply device and generate the hardware insertion/removal trigger instruction based on the insertion/removal connection state.

8. The chainsaw according to claim 2, further comprising a photosensitive module integrated with the display device or the housing, wherein the control device is configured to acquire light detection information from the photosensitive module and convert the light detection information into a first brightness adjustment instruction.

9. The chainsaw according to claim 2, wherein the display device is configured to be communicatively connected to an external device, and the external device is at least configured to allow a user to set display brightness of the display interface.

10. The chainsaw according to claim 1, wherein the control device is configured to turn off the display interface when a duration for which no operation is performed on the chainsaw reaches a preset time.

11. The chainsaw according to claim 1, wherein the display device is configured to set the preset time in a stepless adjustment manner.

12. The chainsaw according to claim 1, further comprising an Internet of things (IoT) module configured to be communicatively connected to at least an external device to receive or send information related to the chainsaw, wherein a projection of a display plane on a first plane at least partially overlaps a projection of the loT module on the first plane, and the first plane is substantially parallel to the display plane.

13. The chainsaw according to claim 12, wherein the loT module is at least partially located within a preset spherical region with a center being a display center of the display interface and a radius being greater than or equal to 0 mm and less than or equal to 50 mm.

14. The chainsaw according to claim 12, wherein the loT module is provided with a universal asynchronous receiver-transmitter (UART) interface, and the loT module establishes a bidirectional communication connection with the control device through the UART interface.

15. A power tool, comprising:
a cutting portion;
a body portion comprising a housing, wherein a front end of the body portion is configured for mounting the cutting portion;
an electric motor accommodated in the housing and configured to output power to drive the cutting portion to work;
a power supply device detachably connected to the housing to provide electrical energy for the power tool;
a display device mounted to the housing, wherein the display device has a display interface for displaying an operating state of the chainsaw; and
a control device electrically connected to at least the display device;
wherein
the control device is configured to respond to any one of a plurality of preset instructions to light up the display interface.

16. A chainsaw, comprising:
a working component comprising a guide plate and a chain;
a body portion comprising a housing, wherein a front end of the body portion is configured for mounting the working component;
an electric motor accommodated in the housing and configured to output power to drive the working component to work;
a power supply device detachably connected to the housing to provide electrical energy for the chainsaw;
a display device mounted to the housing, wherein the display device has a display interface for displaying an operating state of the chainsaw; and
a control device electrically connected to at least the display device;
wherein
the display interface has at least first display brightness and second display brightness; and
the control device is configured to respond to any one of at least two preset instructions to control the display interface to switch from the first display brightness to the second display brightness.

17. The chainsaw according to claim 16, wherein the at least two preset instructions comprise at least one of a button trigger instruction, an adaptive photosensitive trigger instruction, or a remote trigger instruction.

18. The chainsaw according to claim 16, further comprising a photosensitive module integrated with the display device or the housing, wherein the control device is configured to acquire light detection information from the photosensitive module and convert the light detection information into a first brightness adjustment instruction.

19. The chainsaw according to claim 16, further comprising an operating member, wherein the operating member comprises at least one of a button, a toggle, or a switch, and the control device is configured to acquire position detection information of the operating member and convert the position detection information into a second brightness adjustment instruction.

20. The chainsaw according to claim 16, wherein the display device is configured to be communicatively connected to an external device, and the external device is at least configured to allow a user to set display brightness of the display interface.
